(19) Europäisches Patentamt

European Patent Office

Office européen des brevets

(11) EP 2 806 608 B1

(12) **EUROPEAN PATENT SPECIFICATION**

(45) Date of publication and mention
of the grant of the patent:
**19.12.2018  Bulletin 2018/51**

(21) Application number: **13754457.3**

(22) Date of filing: **27.02.2013**

(51) Int Cl.:
***H04L 27/00*** *(2006.01)*

(86) International application number:
**PCT/CN2013/071916**

(87) International publication number:
**WO 2013/127332 (06.09.2013 Gazette 2013/36)**

(54) **CONTROL CHANNEL MODULATION AND DEMODULATION METHOD, BASE STATION AND USER EQUIPMENT**

STEUERKANALMODULATIONS- UND -DEMODULATIONSVERFAHREN, BASISSTATION UND BENUTZERVORRICHTUNG

PROCÉDÉ DE MODULATION ET DE DÉMODULATION DE CANAL DE COMMANDE, STATION DE BASE ET ÉQUIPEMENT UTILISATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **28.02.2012  CN 201210047491**

(43) Date of publication of application:
**26.11.2014  Bulletin 2014/48**

(73) Proprietor: **Huawei Device Co., Ltd.
Shenzhen, Guangdong 518129 (CN)**

(72) Inventor: **LI, Yingyang
Shenzhen
Guangdong 518129 (CN)**

(74) Representative: **Pfenning, Meinig & Partner mbB
Patent- und Rechtsanwälte
Joachimsthaler Straße 10-12
10719 Berlin (DE)**

(56) References cited:
CN-A- 101 286 815      CN-A- 101 516 104
CN-A- 101 938 851      CN-A- 102 340 370
US-A1- 2011 299 484

- **LG ELECTRONICS: "Remaining Issues on CQI-only Transmission", 3GPP DRAFT; R1-110398_UL_MIMO_CQI-ONLY PUSCH TRANSMISSION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Dublin, Ireland; 20110117, 13 January 2011 (2011-01-13), XP050490383, [retrieved on 2011-01-13]**
- **INTEL CORPORATION: "Performance Analysis of the Enhanced Downlink Control Signalling", 3GPP DRAFT; R1-113202_EPDCCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Zhuhai; 20111010, 4 October 2011 (2011-10-04), XP050538324, [retrieved on 2011-10-04]**
- **ERICSSON ET AL: "On enhanced PDCCH design", 3GPP DRAFT; R1-112928, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Zhuhai; 20111010, 4 October 2011 (2011-10-04), XP050538137, [retrieved on 2011-10-04]**

• **ERICSSON: "Downlink power setting", 3GPP DRAFT; R1-072457 {DOWNLINK POWER SETTINGS}, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Kobe, Japan; 20070507, 2 May 2007 (2007-05-02), XP050488570, [retrieved on 2007-05-02]**

## Description

## TECHNICAL FIELD

The present invention relates to the communications technologies, and in particular, to a control channel modulation and demodulation method, a base station, and a user equipment.

## BACKGROUND

In a Long Term Evolution (Long Term Evolution, hereinafter referred to as LTE)/LTE-Advanced (LTE-Advanced, hereinafter referred to as LTE-A) system developed by the 3rd Generation Partnership Project (3rd Generation Partnership Project, hereinafter referred to as 3GPP), an orthogonal frequency division multiple access (Orthogonal Frequency Division Multiple Access, hereinafter referred to as OFDMA) manner is generally used as a downlink multiple access manner. Downlink resources in the system are divided into orthogonal frequency division multiplexing (Orthogonal Frequency Division Multiplexing, hereinafter referred to as OFDM) symbols in terms of time and are divided into subcarriers in terms of frequency.

In the prior art, one downlink subframe includes two timeslots (timeslot), and each timeslot includes seven or six OFDM symbols. Therefore, one downlink subframe includes fourteen or twelve OFDM symbols altogether. One resource block (Resource Block, hereinafter referred to as RB) includes twelve subcarriers in a frequency domain and includes one timeslot in a time domain. A certain subcarrier in a certain OFDM symbol is called a resource element (Resource Element, hereinafter referred to as RE). Two RBs with the same subcarriers but different timeslots in a subframe are called an RB pair.

In an existing LTE system, a subframe is divided into a control part and a data part. The control part includes a physical downlink control channel (Physical Downlink Control Channel, hereinafter referred to as PDCCH) and the like. The data part includes a physical downlink shared channel (Physical Downlink Shared Channel, hereinafter referred to as PDSCH). The control part and the data part are divided according to time in the subframe. One complete PDCCH is formed by one or more control channel elements (Control Channel Element, hereinafter referred to as CCE), one CCE is formed by nine resource element groups (Resource Element Group, hereinafter referred to as REG), and each REG includes four REs.

With advancement of technologies, a capacity of a control channel is limited due to introduction of such technologies as a multiple input multiple output (Multiple Input Multiple Output, hereinafter referred to as MIMO) technology and a Coordinated Multiple Points Transmission (Coordinated Multiple Points Transmission, hereinafter referred to as CoMP) technology. Therefore, a PDCCH whose transmission is based on an MIMO precoding manner is introduced. The PDCCH can be demodulated based on a demodulation reference signal (Demodulation Reference Signal, hereinafter referred to as DM RS) of a user equipment (User Equipment, hereinafter referred to as UE), and is called an enhanced physical downlink control channel (Enhanced PDCCH, hereinafter referred to as E-PDCCH) hereinafter. The E-PDCCH and the PDSCH can be multiplexed in a data region of a subframe by using a frequency division multiplexing (Frequency Division Multiplexing, hereinafter referred to as FDM) method.

According to a mapping manner of the E-PDCCH, E-PDCCHs may be classified into a localized E-PDCCH and a distributed E-PDCCH. For the localized E-PDCCH, the E-PDCCH is mapped centrally to one RB pair or adjacent RB pairs. In this way, a base station may choose, according to a channel state report of the UE, an RB pair with a better channel condition to send the E-PDCCH, so as to obtain a frequency scheduling gain. For the distributed E-PDCCH, the E-PDCCH is mapped dispersedly to a plurality of RB pairs, so as to obtain benefits of frequency diversity.

The localized E-PDCCH is used as an example. In one RB pair, there are many REs used to transmit the data part of the E-PDCCH. It is not economical to use all these REs to transmit control information of a same UE. Therefore, these REs may also be divided into several control channel elements of the E-PDCCH, which are called enhanced control channel elements (enhanced Control Channel Element, hereinafter referred to as eCCE). Herein, it is not limited that the number of REs in each eCCE must be the same.

The E-PDCCH is sent in the data region of the subframe. The number of available REs that are used for the E-PDCCH and are in one RB pair depends on such factors as the number of cell reference signal (Cell Reference Signal, hereinafter referred to as CRS) ports, the number n of symbols of a backward compatible control channel, the number of DM RS ports, channel state information reference signal (Channel State Information Reference Signal, hereinafter referred to as CSI-RS) port configuration, and whether the subframe is a multicast/broadcast single frequency network (Multicast/Broadcast Single Frequency Network, hereinafter referred to as MBSFN) subframe. These factors cause that in one RB pair in different subframes, the number of REs available for E-PDCCH transmission may be unequal. Inconsistencies of sizes of eCCEs among subframes may be reduced by dividing eCCEs of different numbers in RB pairs of different subframes. However, in this manner, the size of eCCEs in each subframe remains cannot be ensured to be unchanged.

A result caused by a change in the size of the eCCEs is as follows: For an E-PDCCH in one format and a certain eCCE aggregation level, the E-PDCCH may be modulated by using a quadrature phase shift keying (Quadrature Phase Shift Keying, hereinafter referred to as QPSK) modulation method in a part of the subframes, whereas if the E-PDCCH on some other subframes is modulated by using the QPSK modulation method, a coding rate of the E-PDCCH may be extremely high and may even be greater than 1. That is, at the eCCE aggregation level, the base station cannot send the E-PDCCH. In this case, in the prior art, a higher eCCE aggregation level is used by the base station to send the E-PDCCH, and when the UE detects the E-PDCCH, the UE may not detect an alternative E-PDCCH at this eCCE aggregation level. However, sometimes the UE is in an extremely good channel condition, and using a higher eCCE aggregation level to send the E-PDCCH by the base station increases overhead of a control channel and reduces a downlink resource utilization rate.

LG ELECTRONICS: "Remaining Issues on CQI-only Transmission" (XP050490383) discloses that for a given information bit size and number of assigned REs, the effective coding rate can be decreased by using a higher modulation order.

## SUMMARY

The present invention provides a control channel modulation and demodulation method, a base station, and a user equipment, so as to reduce overhead of control signaling and improve a downlink resource utilization rate.

According to one aspect, a control channel modulation method is provided, including:

determining, according to a length of control information borne on a control channel and the number of resource elements occupied by the control channel, an effective coding rate that is at the time when a first modulation manner is used to modulate the control channel; and

modulating the control channel by using a second modulation manner when the effective coding rate is greater than a first threshold;

further comprising:

setting, according to channel quality information reported by a user equipment, the first threshold corresponding to the user equipment.

According to still another aspect, a base station is provided, including:

a modulator; and

at least one processor, coupled to the modulator, where the processor is configured to, according to a length of control information borne on a control channel and the number of resource elements occupied by the control channel, determine an effective coding rate that is at the time when a first modulation manner is used to modulate the control channel, and

the modulator is configured to modulate the control channel by using a second modulation manner when the effective coding rate determined by the processor is greater than a first threshold;

the processor is further configured to set, according to channel quality information reported by a user equipment, the first threshold corresponding to the user equipment.

According to still another aspect, a user equipment is provided, including:

a demodulator; and

at least one processor, coupled to the demodulator, where the processor is configured to, according to a length of control information borne on a control channel and the number of resource elements occupied by the control channel, determine an effective coding rate that is at the time of demodulating the control channel by using a first modulation manner, and

the demodulator is configured to demodulate the control channel by using a second modulation manner when the effective coding rate determined by the processor is greater than a first threshold;

a receiver, configured to: receive the first threshold sent by a base station through a broadcast channel; or receive the first threshold sent by the base station by using radio resource control signaling, wherein the first threshold is set by the base station for the user equipment according to channel quality information reported by the user equipment.

Technical effects in one aspect of the embodiments of the present invention are: determining, according to a length of control information borne on a control channel and the number of resource elements occupied by the control channel, an effective coding rate that is at the time when a first modulation manner is used to modulate the control channel; and modulating the control channel by using a second modulation manner when the effective coding rate is greater than a first threshold, so that sending of the control channel can be completed by using less resource elements, thereby reducing overhead of control signaling and further improving a downlink resource utilization rate.

## BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.

FIG. 1 is a flowchart of an embodiment of a control channel modulation method according to the present invention;

FIG. 2 is a flowchart of another embodiment of a control channel modulation method according to the present invention;

FIG 3 is a flowchart of an embodiment of a control channel demodulation method according to the present invention;

FIG. 4 is a flowchart of another embodiment of a control channel demodulation method according to the present invention;

FIG. 5 is a schematic structural diagram of an embodiment of a base station according to the present invention;

FIG. 6 is a schematic structural diagram of another embodiment of a base station according to the present invention;

FIG. 7 is a schematic structural diagram of an embodiment of a user equipment according to the present invention; and

FIG. 8 is a schematic structural diagram of another embodiment of a user equipment according to the present invention.

## DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by persons of ordinary skill in the art based on the embodiments of the present invention without creative efforts shall fall within the protection scope of the present invention.

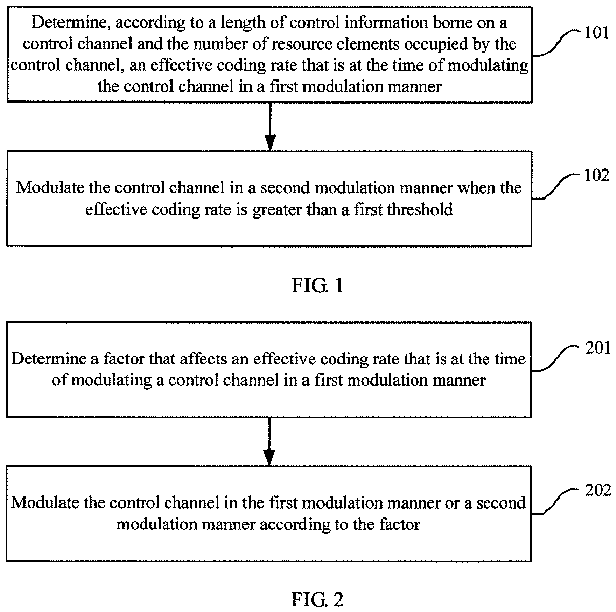

FIG. 1 is a flowchart of a control channel modulation method according to an embodiment of the present invention. As shown in FIG. 1, the control channel modulation method includes:

Step 101: Determine, according to a length of control information borne on a control channel and the number of resource elements occupied by the control channel, an effective coding rate that is at the time when a first modulation manner is used to modulate the control channel.

Specifically, when the length of the control information borne on the control channel is N bit, and the number of resource elements occupied by the control channel is R, that is, it is required to map the control channel to R resource elements for transmission, effective coding rate r that is at the time when the first modulation manner is used to modulate the control channel may be:

$$r = N/(2R)$$

Step 102: Modulate the control channel by using a second modulation manner when the effective coding rate is greater than a first threshold.

As an option or an extra, the control channel is modulated in the first modulation manner when the effective coding rate is smaller than or equal to the first threshold.

The first modulation manner may be a QPSK modulation manner; and the second modulation manner may be a quadrature amplitude modulation manner that includes 16 symbols (16 Quadrature Amplitude Modulation, hereinafter referred to as 16QAM).

In this embodiment, the first threshold corresponding to a user equipment may be set according to channel quality information reported by the user equipment. Certainly, this is only an example of setting the first threshold. This embodiment is not limited to this. The first threshold may also be predefined in a standard, or the first threshold may be preplanned by an operator during planning. A setting manner and a size of the first threshold are not limited in this embodiment.

In an implementation manner of this embodiment, the control information borne on the control channel includes control information which is in various formats and is detected by the user equipment; or the control information borne on the control channel includes control information which is in a normal format and is detected by the user equipment; or the length of the control information borne on the control channel includes a maximum value of lengths of control information which is in various formats and is detected by the user equipment.

In another implementation manner of this embodiment, the control channel includes a control channel whose aggregation level is a predetermined level, where the predetermined level may be 1.

At the time when a second modulation manner is used to modulate the control channel such as the 16QAM manner, amplitude is required to carry modulation information. Therefore, at the time when the second modulation manner is used to modulate the control channel, it is required to determine energy per resource element (Energy Per Resource Element, hereinafter referred to as EPRE) of a data modulation symbol of the control channel, that is, a transmit power of the data modulation symbol of the control channel.

In an implementation manner of this embodiment, when the resource elements occupied by the control channel are distributed in one RB pair or at least two adjacent RB pairs, that is, the control channel is a localized control channel; and at the time when the second modulation manner is used to modulate the control channel, if it is required to share a demodulation reference signal between the control channel and a shared channel, the EPRE of the data modulation symbol of the control channel is set to be equal to EPRE of a demodulation reference signal port, where the EPRE of the demodulation reference signal port is equal to EPRE of the shared channel.

In another implementation manner of this embodiment, at the time when the second modulation manner is used to modulate the control channel, EPRE of a data modulation symbol of the control channel is determined according to a ratio of the EPRE of the data modulation symbol of the control channel to EPRE of a reference signal of the control channel; or EPRE of a data modulation symbol of the control channel is determined according to a specific parameter $P_A$ of the user equipment, where herein $P_A$ is a parameter which is defined in LTE Release 8/9/10 and is used to indicate a sending power of a PDSCH of the UE, and a value of $P_A$ depends on a downlink state of the UE; or EPRE of a data modulation symbol of the control channel is determined according to the effective coding rate and the first threshold; or EPRE of a data modulation symbol of the control channel is determined according to a specific parameter $P_A$ of the user equipment, the effective coding rate, and the first threshold.

In the foregoing embodiment, the effective coding rate that is at the time when the first modulation manner is used to modulate the control channel is determined according to the length of the control information borne on the control channel and the number of resource elements occupied by the control channel; and the control channel is modulated in the second modulation manner when the effective coding rate is greater than the first threshold, so that sending of the control channel can be completed by using less resource elements, thereby reducing overhead of control signaling and further improving a downlink resource utilization rate.

In the embodiment shown in FIG. 1 of the present invention, the control channel may be an E-PDCCH. For an E-PDCCH, the QPSK modulation manner or the 16QAM modulation manner may be used for modulation according to an effective coding rate mapped by the E-PDCCH to a time-frequency resource. Specifically, a first threshold r0 is set on a system, a length of control information borne on the E-PDCCH is denoted as N bit, and it is required to map the control information to R REs for transmission. If the QPSK modulation manner is used, the effective coding rate is r = N/(2R); and r is compared with r0. If r is greater than r0, the E-PDCCH is modulated in the 16QAM manner, so that the effective coding rate is reduced to r/2 = N/(4R); and if r is smaller than or equal to r0, the E-PDCCH is modulated in the QPSK modulation manner.

In this embodiment of the present invention, r0 may be set for the UE by a base station according to information such as a channel quality report reported by the UE, so that link performance of the E-PDCCH can be optimized. Certainly, the present invention is not limited to this, and r0 may also be predefined in the standard or r0 may be preplanned by the operator during planning.

The setting manner of the first threshold is not limited in the present invention. For example, r0 may be 0.8 or 1. A value of r0 is not limited in the present invention.

Actually, the UE needs to detect PDCCHs in various formats, such as downlink_grant (Downlink_grant, hereinafter referred to as DL_grant) in a normal format, DL grant in fallback (fallback) format, uplink_grant (Uplink_grant, hereinafter referred to as UL_grant) in a normal format, and UL_grant in fallback format. The number of bits of control information in the foregoing formats may not be completely the same. When the control information in the foregoing formats is mapped to an eCCE of an alternative E-PDCCH for sending, effective coding rates are not the same either. Therefore, for the control information in various formats that the UE needs to detect, the effective coding rates may be calculated separately according to the actual number of bits of the control information, and a modulation manner is chosen according to the method provided in the embodiment shown in FIG. 1 of the present invention. Alternatively, the control channel in fallback format may also be modulated only in the QPSK modulation manner because the control channel in fallback format is introduced to improve reliability, and for the control information in a normal format, a modulation manner may be chosen according to the effective coding rate of the control information in a normal format and the method provided in the embodiment shown in FIG 1 of the present invention. Alternatively, in order to reduce complexity, the control information in various formats that the UE needs to detect may be modulated by using a same modulation manner, for example, the effective coding rate may be calculated according to the maximum value of the number of bits of the control information in various formats that the UE needs to detect, and then a modulation manner is chosen according to the method provided in the embodiment shown in FIG 1 of the present invention.

In addition, because only when the number of REs used to send the E-PDCCH is extremely small, which results in a high coding rate that is at the time of modulating the E-PDCCH in the QPSK modulation manner, benefits of using the 16QAM modulation manner can be revealed. Therefore, a situation that switching between the QPSK modulation manner and the 16QAM modulation manner is required only happens on an E-PDCCH whose aggregation level is 1. Therefore, in the present invention, it may be limited that only for the E-PDCCH whose aggregation level is 1, a modulation manner may be chosen according to the method provided in the embodiment shown in FIG. 1 of the present invention; and E-PDCCHs of other aggregation levels are modulated in the QPSK modulation manner.

At the time of modulating the E-PDCCH in the 16QAM manner, amplitude is required to carry modulation information. Therefore, at the time of modulating the E-PDCCH in the 16QAM manner, it is required to determine EPRE of a data modulation symbol of the E-PDCCH, that is, a transmit power of the data modulation symbol of the E-PDCCH. When the 16QAM modulation manner is used, a simple method for setting the EPRE of the data modulation symbol of the E-PDCCH is to keep the EPRE of the modulation symbol of the E-PDCCH equal to EPRE of a reference signal of the E-PDCCH.

For a distributed E-PDCCH, generally the reference signal of the E-PDCCH is shared by a plurality of UEs, so that the EPRE of the reference signal of the E-PDCCH cannot be adjusted according to a requirement of a single UE. A method is to still set a power of the reference signal of the E-PDCCH to be equal to a power of the data modulation symbol of the E-PDCCH. The reference signal of the E-PDCCH is set according to only a requirement of a UE having a poorest channel condition, and this causes that for a UE having a good channel condition, the power of sending the data modulation symbol of the E-PDCCH is wasted. For a localized E-PDCCH, a reference signal of the E-PDCCH is dedicated to a certain UE. Generally, based on that EPRE of a data modulation symbol is equal to the EPRE of the reference signal, the base station may adjust the EPRE of the reference signal of the E-PDCCH to ensure demodulation performance of the E-PDCCH. However, under some circumstances, the base station may not be able to adjust the EPRE of the reference signal of the E-PDCCH freely. For example, when a condition that the E-PDCCH and the PDSCH are multiplexed in one RB pair and share a DM RS port occurs, the DM RS port is a reference of PDSCH demodulation at the same time; or when different RB pairs in one resource block group (Resource Block Group, hereinafter referred to as RBG) are used in the E-PDCCH and the PDSCH separately, if channel estimation of the PDSCH is performed according to reference signals of all RB pairs in a whole RBG, EPRE, occupied by the E-PDCCH, of the DM RS port affects the EPRE of the PDSCH. It is a solution to set the EPRE of the DM RS port, the EPRE of the data modulation symbol of the E-PDCCH, and the EPRE of the PDSCH to a same value.

In an implementation manner of the present invention, in order to simplify system design, it may be set that the distributed E-PDCCH is not modulated in the 16QAM manner, but is modulated only in the QPSK modulation manner. For the localized E-PDCCH, a modulation manner may be chosen according to the method provided in the embodiment shown in FIG 1 of the present invention. At the time of modulating the E-PDCCH in the 16QAM manner, if it is required to share the DM RS between the E-PDCCH and the PDSCH, the EPRE of the data modulation symbol of the E-PDCCH is set to be equal to the EPRE of the DM RS port, where the EPRE of the DM RS port is equal to the EPRE of the PDSCH.

In another implementation manner of the present invention, at the time of modulating the E-PDCCH in the 16QAM manner, the EPRE of the data modulation symbol of the E-PDCCH may be determined according to a ratio of the EPRE of the data modulation symbol of the E-PDCCH to the EPRE of the reference signal of the E-PDCCH, where the ratio is denoted as e, EPRE = f(e), and the ratio may be configured by using RRC signaling; or the EPRE of the data modulation symbol of the E-PDCCH may be determined according to the specific parameter $P_A$ of the UE, that is, EPRE = f($P_A$), where herein $P_A$ is a parameter which is defined in LTE Release 8/9/10 and used to indicate the sending power of the PDSCH of the UE, and the value of $P_A$ depends on the downlink state of the UE; or because a size of the eCCE may possibly change, many different effective coding rates may exist if the 16QAM manner is used, and the effective coding rate r may affect link performance that is at the time of modulating the E-PDCCH in the 16QAM manner. Therefore, the EPRE of the data modulation symbol of the E-PDCCH may be determined according to the effective coding rate r and the first threshold r0, that is, EPRE = f(r,r0); or the EPRE of the data modulation symbol of the E-PDCCH may be determined according to the specific parameter $P_A$ of the UE, the effective coding rate r, and the first threshold r0, that is, EPRE = f($P_A$,r,r0). A specific form of the foregoing functions is not limited in the present invention.

FIG. 2 is a flowchart of a control channel modulation method according to another embodiment of the present invention. As shown in FIG. 2, the control channel modulation method may include:

Step 201: Determine a factor that affects an effective coding rate that is at the time of modulating a control channel by using a first modulation manner.

In this embodiment, the factor includes one or a combination of the following:

(1) a subframe on which the control channel is located is an MBSFN subframe or an ordinary subframe except the MBSFN subframe;
(2) the number of OFDM symbols occupied by a backward compatible control channel;
(3) the number of REs used to transmit a DM RS of the control channel in each RB pair;
(4) whether an unusable RE exists, in the subframe on which the control channel is located, due to a CSI-RS; and
(5) an aggregation level of the control channel.

Step 202: Modulate the control channel in the first modulation manner or a second modulation manner according to the factor.

Specifically, when the subframe on which the control channel is located is the MBSFN subframe, or the aggregation level of the control channel is a level except a predetermined level, the control channel is modulated in the first modulation manner; and when the subframe on which the control channel is located is the ordinary subframe, and the aggregation level of the control channel is the predetermined level, the control channel is modulated in the second modulation manner; or when the number of OFDM symbols occupied by the backward compatible control channel is smaller than or equal to a second threshold, or the aggregation level of the control channel is a level except a predetermined level, the control channel is modulated in the first modulation manner; and when the number of OFDM symbols occupied by the backward compatible control channel is greater than the second threshold, and the aggregation level of the control channel is the predetermined level, the control channel is modulated in the second modulation manner; or

when the subframe on which the control channel is located is the ordinary subframe, the number of OFDM symbols occupied by the backward compatible control channel is greater than a second threshold, and the aggregation level of the control channel is a predetermined level, the control channel is modulated in the second modulation manner; and otherwise, the control channel is modulated in the first modulation manner; or

when the subframe on which the control channel is located is the ordinary subframe, the number of OFDM symbols occupied by the backward compatible control channel is greater than a second threshold, the aggregation level of the control channel is a predetermined level, and the unusable RE exists, in the subframe on which the control channel is located, due to the CSI-RS, the control channel is modulated in the second modulation manner; and otherwise, the control channel is modulated in the first modulation manner.

The second threshold is a positive number. According to LTE Release 8/9/10, a value range of the second threshold may be 0~4, and a size of the second threshold is not limited in this embodiment.

In this embodiment, the predetermined level may be 1.

In this embodiment, the first modulation manner may be a QPSK modulation manner; and the second modulation manner may be a 16QAM manner.

In this embodiment, at the time when the second modulation manner is used to modulate the control channel such as the 16QAM manner, amplitude is also required to carry modulation information. Therefore, at the time when the second modulation manner is used to modulate the control channel, it is also required to determine EPRE of a data modulation symbol of the control channel, that is a transmit power of the data modulation symbol of the control channel. In this embodiment, the manner provided in the embodiment shown in FIG. 1 of the present invention may be used as a manner of determining the EPRE of the data modulation symbol of the control channel. Details are not described herein again.

In the foregoing embodiment, sending of the control channel can be completed by using less resource elements, thereby reducing overhead of control signaling and further improving a downlink resource utilization rate.

In the embodiment shown in FIG. 2 of the present invention, the control channel may be an E-PDCCH. There are many factors that may affect an effective coding rate of the E-PDCCH. For example, the factors may include one or a combination of the following:

(1) whether a CRS exists in a data region of a subframe on which the E-PDCCH is located, that is, whether the subframe on which the E-PDCCH is located is an MBSFN subframe or an ordinary subframe except the MBSFN subframe;
(2) the number n of OFDM symbols occupied by a backward compatible E-PDCCH;
(3) the number of REs used to transmit a DM RS of the E-PDCCH in each RB pair, where if only port 7 and/or port 8 is used, the DM RS occupies only 12 REs; and if ports 7 to 10 are used, it is required to reserve 24 REs for the DM RS;
(4) whether an unusable RE exists, in the subframe on which E-PDCCH is located, due to a CSI-RS; and
(5) an aggregation level of an eCCE of the E-PDCCH.

In this embodiment of the present invention, it may be configured that a UE switches the QPSK modulation manner or the 16QAM manner according to one or more of the foregoing factors, so as to approximately implement effects of choosing a modulation manner of the E-PDCCH according to the effective coding rate of the E-PDCCH. For example, for an E-PDCCH whose aggregation level is 1 in an MBSFN subframe, the QPSK modulation manner is used; and for an E-PDCCH whose aggregation level is 1 in an ordinary subframe, the 16QAM manner is used. Alternatively, when the number n of OFDM symbols occupied by the backward compatible E-PDCCH is smaller than or equal to a second threshold n0, for the E-PDCCH whose aggregation level is 1, the QPSK modulation manner is used; and otherwise, the 16QAM manner is used. Alternatively, a type of the subframe and the number n of OFDM symbols occupied by the backward compatible E-PDCCH are used jointly. For example, for a backward compatible E-PDCCH in an ordinary subframe, when the number n of OFDM symbols occupied by the E-PDCCH is greater than the second threshold n0, the 16QAM modulation manner is used; and otherwise, the QPSK modulation manner is used. Alternatively, a type of the subframe, the number n of OFDM symbols occupied by the backward compatible E-PDCCH, and whether an unusable RE exists due to the CSI-RS are used jointly. For example, for a backward compatible E-PDCCH in an ordinary subframe, when the number n of OFDM symbols occupied by the E-PDCCH is greater than the second threshold n0, and an unusable RE exists, in the ordinary subframe, due to the CSI-RS, the 16QAM manner is used; and otherwise, the QPSK modulation manner is used.

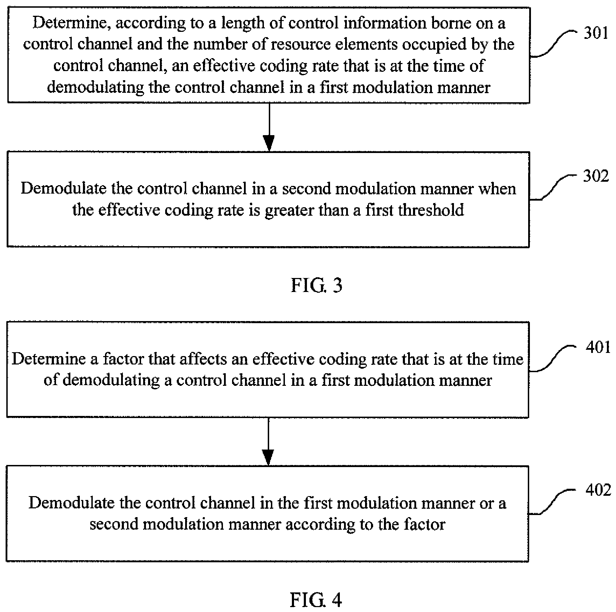

FIG. 3 is a flowchart of a control channel demodulation method according to an embodiment of the present invention. As shown in FIG 3, the control channel demodulation method may include:

Step 301: Determine, according to a length of control information borne on a control channel and the number of resource elements occupied by the control channel, an effective coding rate that is at the time of demodulating the control channel by using a first modulation manner.

The control channel in this embodiment may be an E-PDCCH.

Specifically, when the length of the control information borne on the control channel is N bit, and the number of resource elements occupied by the control channel is R, that is, it is required to map the control channel to R resource elements for transmission, effective coding rate r that is at the time when the first modulation manner is used to demodulate the control channel may be:

$$r = N/(2R)$$

Step 302: Demodulate the control channel by using a second modulation manner when the effective coding rate is greater than a first threshold.

As an option or an extra, the control channel is demodulated in the first modulation manner when the effective coding rate is smaller than or equal to the first threshold.

The first modulation manner may be a QPSK modulation manner; and the second modulation manner may be a 16QAM manner.

In this embodiment, a user equipment may receive the first threshold sent by a base station through a broadcast channel, that is, the first threshold may be configured by the base station through the broadcast channel and therefore is applicable to all user equipments in a cell; or may receive the first threshold sent by a base station by using radio resource control (Radio Resource Control, hereinafter referred to as RRC) signaling, where the first threshold is set by the base station for the user equipment according to channel quality information reported by the user equipment. In this case, the first threshold is set by the base station separately for each user equipment because an optimal first threshold depends on a channel condition of the user equipment. Therefore, the base station may set a proper first threshold for each user equipment according to the channel quality information reported by the user equipment, so that link performance of the control channel can be improved. Certainly, the foregoing descriptions are only several examples of obtaining the first threshold by the user equipment, and this embodiment is not limited to this. The first threshold may also be predefined in a standard or the first threshold may be preplanned by an operator during planning. In this way, the user equipment can obtain the first threshold without a signaling notification. A setting manner and a size of the first threshold are not limited in this embodiment.

In an implementation manner of this embodiment, the control information borne on the control channel includes control information which is in various formats and is detected by the user equipment; or the control information borne on the control channel includes control information which is in a normal format and is detected by the user equipment; or the length of the control information borne on the control channel includes a maximum value of lengths of control information which is in various formats and is detected by the user equipment.

In another implementation manner of this embodiment, the control channel includes a control channel whose aggregation level is a predetermined level, where the predetermined level may be 1.

At the time when the second modulation manner is used to modulate the control channel such as the 16QAM manner, amplitude is required to carry modulation information. Therefore, at the time of demodulating the control channel in the second modulation manner, it is required to determine EPRE of a data modulation symbol of the control channel, that is, a transmit power of the data modulation symbol of the control channel.

In an implementation manner of this embodiment, when the resource elements occupied by the control channel are distributed in one RB pair or at least two adjacent RB pairs, that is, the control channel is a localized control channel, and at the time of demodulating the control channel in the second modulation manner, if it is required to share a demodulation reference signal between the control channel and a shared channel, the EPRE of the data modulation symbol of the control channel is set to be equal to EPRE of a demodulation reference signal port, where the EPRE of the demodulation reference signal port is equal to EPRE of the shared channel.

In another implementation manner of this embodiment, at the time of demodulating the control channel in the second modulation manner, the EPRE of the data modulation symbol of the control channel may be determined according to a ratio, sent by the base station, of the EPRE of the data modulation symbol of the control channel to EPRE of a reference signal of the control channel; or the EPRE of the data modulation symbol of the control channel is determined according to a specific parameter $P_A$ of the user equipment, where herein $P_A$ is a parameter which is defined in LTE Release 8/9/10 and is used to indicate a sending power of a PDSCH of the UE, and a value of $P_A$ depends on a downlink state of the UE; or the EPRE of the data modulation symbol of the control channel is determined according to the effective coding rate and the first threshold; or the EPRE of the data modulation symbol of the control channel is determined according to a specific parameter $P_A$ of the user equipment, the effective coding rate, and the first threshold

Specifically, at the time of modulating the E-PDCCH in the 16QAM manner, the EPRE of the data modulation symbol of the E-PDCCH may be determined according to a ratio of the EPRE of the data modulation symbol of the E-PDCCH to EPRE of a reference signal of the E-PDCCH, where the ratio is denoted as e, EPRE = f(e), and the ratio may be configured by using the RRC signaling; or the EPRE of the data modulation symbol of the E-PDCCH may be determined according to the specific parameter $P_A$ of the UE, that is, EPRE = $f(P_A)$, where herein $P_A$ is a parameter which is defined in LTE Release 8/9/10 and used to indicate the sending power of the PDSCH of the UE, and the value of $P_A$ depends on the downlink state of the UE; or because a size of an eCCE may possibly change, many different effective coding rates may exist if the 16QAM manner is used, and the effective coding rate r may affect link performance that is at the time of modulating the E-PDCCH in the 16QAM manner. Therefore, the EPRE of the data modulation symbol of the E-PDCCH may be determined according to the effective coding rate r and the first threshold r0, that is, EPRE = f(r,r0); or the EPRE of the data modulation symbol of the E-PDCCH may be determined according to the specific parameter $P_A$ of the UE, the effective coding rate r, and the first threshold r0, that is, EPRE = $f(P_A, r,r0)$. A specific form of the foregoing functions is not limited in the present invention.

In this foregoing embodiment, overhead of control signaling can be reduced, and a downlink resource utilization rate can be improved.

FIG. 4 is a flowchart of a control channel demodulation method according to another embodiment of the present invention. As shown in FIG. 4, the control channel demodulation method may include:

Step 401: Determine a factor that affects an effective coding rate that is at the time of demodulating a control channel by using a first modulation manner.

In this embodiment, the factor includes one or a combination of the following:

(1) a subframe on which the control channel is located is an MBSFN subframe or an ordinary subframe except the MBSFN subframe;
(2) the number of OFDM symbols occupied by a backward compatible control channel;
(3) the number of REs used to transmit a DM RS of the control channel in each RB pair;
(4) whether an unusable RE exists, in the subframe on which the control channel is located, due to a CSI-RS; and
(5) an aggregation level of the control channel.

Step 402: Demodulate the control channel in the first modulation manner or a second modulation manner according to the factor.

Specifically, when the subframe on which the control channel is located is the MBSFN subframe, or the aggregation level of the control channel is a level except a predetermined level, the control channel is demodulated in the first modulation manner; and when the subframe on which the control channel is located is the ordinary subframe, and the aggregation level of the control channel is the predetermined level, the control channel is demodulated in the second modulation manner; or

when the number of OFDM symbols occupied by the backward compatible control channel is smaller than or equal to a second threshold, or the aggregation level of the control channel is a level except a predetermined level, the control channel is demodulated in the first modulation manner; and when the number of OFDM symbols occupied by the backward compatible control channel is greater than the second threshold, and the aggregation level of the control channel is the predetermined level, the control channel is demodulated in the second modulation manner; or

when the subframe on which the control channel is located is the ordinary subframe, the number of OFDM symbols occupied by the backward compatible control channel is greater than a second threshold, and the aggregation level of the control channel is a predetermined level, the control channel is demodulated in the second modulation manner; and otherwise, the control channel is demodulated in the first modulation manner; or

when the subframe on which the control channel is located is the ordinary subframe, the number of OFDM symbols occupied by the backward compatible control channel is greater than a second threshold, the aggregation level of the control channel is a predetermined level, and the unusable RE exists, in the subframe on which the control channel is located, due to the CSI-RS, the control channel is demodulated in the second modulation manner; and otherwise, the control channel is demodulated in the first modulation manner.

The second threshold is a positive number. According to LTE Release 8/9/10, a value range of the second threshold may be 0~4, and a size of the second threshold is not limited in this embodiment.

In this embodiment, the predetermined level may be 1.

In this embodiment, the first modulation manner may be a QPSK modulation manner; and the second modulation manner may be a 16QAM manner.

In this embodiment, at the time when the second modulation manner is used to modulate the control channel, such as the 16QAM manner, amplitude is also required to carry modulation information. Therefore, at the time of demodulating the control channel in the second modulation manner, it is also required to determine EPRE of a data modulation symbol of the control channel, that is, a transmit power of the data modulation symbol of the control channel. In this embodiment, the manner provided in the embodiment shown in FIG 3 of the present invention may be used as a manner of determining the EPRE of the data modulation symbol of the control channel. Details are not described herein again.

In the foregoing embodiment, overhead of control signaling can be reduced, and a downlink resource utilization rate can be improved.

Persons of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

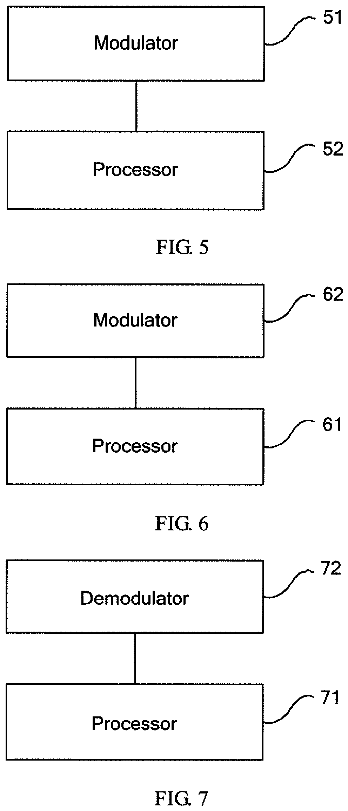

FIG. 5 is a schematic structural diagram of a base station according to an embodiment of the present invention. The base station in this embodiment can implement the process in the embodiment shown in FIG. 1 of the present invention. As shown in FIG 5, the base station may include: a modulator 51 and at least one processor 52, where the processor 52 is coupled to the modulator 51. That the base station includes the modulator 51 and one processor 52 is shown as an example in FIG. 5.

The processor 52 is configured to, according to a length of control information borne on a control channel and the number of resource elements occupied by the control channel, determine an effective coding rate that is at the time when a first modulation manner is used to modulate the control channel.

Specifically, when the length of the control information borne on the control channel is N bit, and the number of resource elements occupied by the control channel is R, that is, it is required to map the control channel to R resource elements for transmission, the processor 52 may determine that effective coding rate r that is at the time when the first modulation manner is used to demodulate the control channel may be:

$$r = N/(2R)$$

The modulator 51 is configured to modulate the control channel by using a second modulation manner when the effective coding rate determined by the processor 52 is greater than a first threshold.

As an option or an extra, the modulator 51 is further configured to modulate the control channel in the first modulation manner when the effective coding rate is smaller than or equal to the first threshold.

In an implementation manner of this embodiment, the control information borne on the control channel includes control information which is in various formats and is detected by a user equipment; or the control information borne on the control channel includes control information which is in a normal format and is detected by a user equipment; or the length of control information borne on the control channel includes a maximum value of lengths of control information which is in various formats and is detected by a user equipment.

In another implementation manner of this embodiment, the control channel includes a control channel whose aggregation level is a predetermined level, where the predetermined level may be 1.

In an implementation manner of this embodiment, the processor 52 is further configured to, when the resource elements occupied by the control channel are distributed in one RB pair or at least two adjacent RB pairs, and the modulator 51 modulates the control channel in the second modulation manner, and if it is required to share a demodulation reference signal between the control channel and a shared channel, set EPRE of a data modulation symbol of the control channel to be equal to EPRE of a demodulation reference signal port, where the EPRE of the demodulation reference signal port is equal to EPRE of the shared channel.

In another implementation manner of this embodiment, the processor 52 is further configured to: when the modulator 51 modulates the control channel in the second modulation manner, determine the EPRE of the data modulation symbol of the control channel according to a ratio of the EPRE of the data modulation symbol of the control channel to EPRE of a reference signal of the control channel; or determine the EPRE of the data modulation symbol of the control channel according to a specific parameter $P_A$ of the user equipment, where herein $P_A$ is a parameter which is defined in LTE Release 8/9/10 and is used to indicate a sending power of a PDSCH of the UE, and a value of $P_A$ depends on a downlink state of the UE; or determine the EPRE of the data modulation symbol of the control channel according to the effective coding rate and the first threshold; or determine the EPRE of the data modulation symbol of the control channel according to the specific parameter $P_A$ of the user equipment, the effective coding rate, and the first threshold.

Further, in an implementation manner of this embodiment, the processor 52 is further configured to set, according to channel quality information reported by the user equipment, a first threshold corresponding to the user equipment. Certainly, this is only an example of setting the first threshold. This embodiment is not limited to this. The first threshold may also be predefined in a standard, or the first threshold may be preplanned by an operator during planning. A setting manner and a size of the first threshold are not limited in this embodiment.

In this embodiment, the first modulation manner may be a QPSK modulation manner, and the second modulation manner may be a 16QAM manner.

In the foregoing embodiment, a processor 52 is configured to, according to a length of control information borne on a control channel and the number of resource elements occupied by the control channel, determine an effective coding rate that is at the time when a first modulation manner is used to modulate the control channel; and when the effective coding rate is greater than a first threshold, a modulator 51 is configured to modulate the control channel by using a second modulation manner, so that sending of the control channel can be completed by using less resource elements, thereby reducing overhead of control signaling and further improving a downlink resource utilization rate.

FIG 6 is a schematic structural diagram of a base station according to another embodiment of the present invention. The base station in this embodiment can implement the process in the embodiment shown in FIG 2 of the present invention. As shown in FIG 6, the base station may include: at least one processor 61 and a modulator 62, where the processor 61 is coupled to the modulator 62. That the base station includes the modulator 62 and one processor 61 is shown as an example in FIG 6.

The processor 61 is configured to determine a factor that affects an effective coding rate that is at the time of modulating a control channel by using a first modulation manner, where the factor includes one or a combination of the following:

(1) a subframe on which the control channel is located is an MBSFN subframe or an ordinary subframe except the MBSFN subframe;
(2) the number of OFDM symbols occupied by a backward compatible control channel;
(3) the number of REs used to transmit a DM RS of the control channel in each RB pair;
(4) whether an unusable RE exists, in the subframe on which the control channel is located, due to a CSI-RS; and
(5) an aggregation level of the control channel.

The modulator 62 is configured to modulate the control channel in the first modulation manner or a second modulation manner according to the factor determined by the processor 61.

Specifically, the modulator 62 is configured to: modulate the control channel in the first modulation manner when the subframe on which the control channel is located is the MBSFN subframe, or the aggregation level of the control channel is a level except a predetermined level; and modulate the control channel in the second modulation manner when the subframe on which the control channel is located is the ordinary subframe, and the aggregation level of the control channel is the predetermined level; or

the modulator 62 is configured to: modulate the control channel in the first modulation manner when the number of OFDM symbols occupied by the backward compatible control channel is smaller than or equal to a second threshold, or the aggregation level of the control channel is a level except a predetermined level; and modulate the control channel in the second modulation manner when the number of OFDM symbols occupied by the backward compatible control channel is greater than the second threshold, and the aggregation level of the control channel is the predetermined level; or

the modulator 62 is configured to: modulate the control channel in the second modulation manner when the subframe on which the control channel is located is an ordinary subframe, the number of OFDM symbols occupied by the backward compatible control channel is greater than a second threshold, and the aggregation level of the control channel is a predetermined level; and otherwise, modulate the control channel in the first modulation manner; or

the modulator 62 is configured to: modulate the control channel in the second modulation manner when the subframe on which the control channel is located is the ordinary subframe, the number of OFDM symbols occupied by the backward compatible control channel is greater than a second threshold, the aggregation level of the control channel is a predetermined level, and the unusable RE exists, in the subframe on which the control channel is located, due to the CSI-RS; and otherwise, modulate the control channel in the first modulation manner.

The second threshold is a positive number. A size of the second threshold is not limited in this embodiment.

In this embodiment, the predetermined level may be 1.

In this embodiment, the first modulation manner may be a QPSK modulation manner; and the second modulation manner may be a 16QAM manner.

In this embodiment, when the modulator 62 is configured to modulate the control channel in the second modulation manner such as the 16QAM manner, amplitude is also required to carry modulation information. Therefore, when the modulator 62 is configured to modulate the control channel in the second modulation manner, the processor 61 is configured to be also required to determine EPRE of a data modulation symbol of the control channel, that is, a transmit power of the data modulation symbol of the control channel. In this embodiment, a manner in which the processor 61 is configured to determine the EPRE of the data modulation symbol of the control channel is the same as the manner in which the processor 52 in the embodiment shown in FIG. 5 of the present invention determines the EPRE of the data modulation symbol of the control channel. Details are not described herein again.

In the foregoing embodiment, sending of the control channel can be completed by using less resource elements, thereby reducing overhead of control signaling and further improving a downlink resource utilization rate.

FIG. 7 is a schematic structural diagram of a user equipment according to an embodiment of the present invention. The user equipment in this embodiment can implement the process in the embodiment shown in FIG. 3 of the present invention. As shown in FIG. 7, the user equipment may include: at least one processor 71 and a demodulator 72, where the processor 71 is coupled to the demodulator 72. That the user equipment includes the demodulator 72 and one processor 71 is shown as an example in FIG. 7.

The processor 71 is configured to, according to a length of control information borne on a control channel and the number of resource elements occupied by the control channel, determine an effective coding rate that is at the time of demodulating the control channel by using a first modulation manner.

The control channel in this embodiment may be an E-PDCCH.

Specifically, when the length of the control information borne on the control channel is N bit, and the number of resource elements occupied by the control channel is R, that is, it is required to map the control channel to R resource elements for transmission, the processor 71 may determine that effective coding rate r that is at the time when the first modulation manner is used to demodulate the control channel may be:

$$r = N/(2R)$$

The demodulator 72 is configured to demodulate the control channel by using a second modulation manner when the effective coding rate determined by the processor 71 is greater than a first threshold.

Further, the demodulator 72 is further configured to demodulate the control channel in the first modulation manner when the effective coding rate is smaller than or equal to the first threshold.

The first modulation manner may be a QPSK modulation manner; and the second modulation manner may be a 16QAM manner.

In an implementation manner of this embodiment, the control information borne on the control channel includes control information which is in various formats and is detected by the user equipment; or the control information borne on the control channel includes control information which is in a normal format and is detected by the user equipment; or the length of the control information borne on the control channel includes a maximum value of lengths of the control information which is in various formats and is detected by the user equipment.

In another implementation manner of this embodiment, the control channel includes a control channel whose aggregation level is a predetermined level, where the predetermined level may be 1.

In an implementation manner of this embodiment, the processor 71 is further configured to, when the resource elements occupied by the control channel are distributed in one RB pair or at least two adjacent RB pairs, and the demodulator 72 demodulates the control channel in the second modulation manner, and if it is required to share a demodulation reference signal between the control channel and a shared channel, set EPRE of a data modulation symbol of the control channel to be equal to EPRE of a demodulation reference signal port, where the EPRE of the demodulation reference signal port is equal to EPRE of the shared channel.

In another implementation manner of this embodiment, the processor 71 is further configured to: determine the EPRE of the data modulation symbol of the control channel when the demodulator 72 demodulates the control channel in the second modulation manner according to a ratio, sent by a base station, of the EPRE of the data modulation symbol of the control channel to EPRE of a reference signal of the control channel; or determine the EPRE of the data modulation symbol of the control channel according to a specific parameter $P_A$ of the user equipment; or determine the EPRE of the data modulation symbol of the control channel according to the effective coding rate and the first threshold; or determine the EPRE of the data modulation symbol of the control channel according to a specific parameter $P_A$ of the user equipment, the effective coding rate, and the first threshold.

Further, in an implementation manner of this embodiment, the processor 71 is further configured to: receive a first threshold sent by the base station through a broadcast channel, that is, the first threshold may be configured by the base station through the broadcast channel and therefore is applicable to all user equipments in a cell; or receive a first threshold sent by the base station by using RRC signaling, where the first threshold is set for the user equipment by the base station according to channel quality information reported by the user equipment. In this case, the first threshold is set by the base station separately for each user equipment because an optimal first threshold depends on a channel condition of the user equipment. Therefore, the base station may set a proper first threshold for each user equipment according to the channel quality information reported by the user equipment, so that link performance of the control channel can be optimized.

Certainly, this embodiment is not limited to this. The first threshold may also be predefined in a standard, or the first threshold may be preplanned by an operator during planning. In this way, the user equipment may obtain the first threshold without a signaling notification. A setting manner and a size of the first threshold are not limited in this embodiment.

In the foregoing embodiment, overhead of control signaling can be reduced, and a downlink resource utilization rate can be improved.

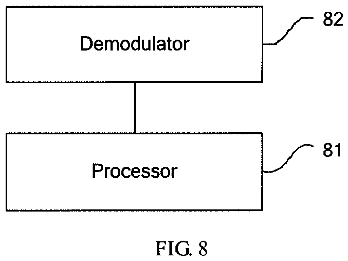

FIG. 8 is a schematic structural diagram of a user equipment according to another embodiment of the present invention. The user equipment in this embodiment can implement the process in the embodiment shown in FIG. 4 of the present invention. As shown in FIG. 8, the user equipment may include: at least one processor 81 and a demodulator 82, where the processor 81 is coupled to the demodulator 82. That the user equipment includes the demodulator 82 and one processor 81 is shown as an example in FIG. 8.

The processor 81 is configured to determine a factor that affects an effective coding rate that is at the time of demodulating a control channel by using a first modulation manner.

The factor includes one or a combination of the following:

(1) a subframe on which the control channel is located is an MBSFN subframe or an ordinary subframe except the MBSFN subframe;
(2) the number of OFDM symbols occupied by a backward compatible control channel;

(3) the number of REs used to transmit a DM RS of the control channel in each RB pair;

(4) whether an unusable RE exists, in the subframe on which the control channel is located, due to a CSI-RS; and

(5) an aggregation level of the control channel.

The demodulator 82 is configured to demodulate the control channel in the first modulation manner or a second modulation manner according to the factor determined by the processor 81.

Specifically, the demodulator 82 is further configured to: demodulate the control channel in the first modulation manner when the subframe on which the control channel is located is the MBSFN subframe, or the aggregation level of the control channel is a level except a predetermined level; and demodulate the control channel in the second modulation manner when the subframe on which the control channel is located is the ordinary subframe, and the aggregation level of the control channel is the predetermined level; or

the demodulator 82 is further configured to: demodulate the control channel in the first modulation manner when the number of OFDM symbols occupied by the backward compatible control channel is smaller than or equal to a second threshold, or the aggregation level of the control channel is a level except a predetermined level; and demodulate the control channel in the second modulation manner when the number of OFDM symbols occupied by the backward compatible control channel is greater than the second threshold, and the aggregation level of the control channel is the predetermined level; or

the demodulator 82 is further configured to: demodulate the control channel in the second modulation manner when the subframe on which the control channel is located is the ordinary subframe, the number of OFDM symbols occupied by the backward compatible control channel is greater than a second threshold, and the aggregation level of the control channel is a predetermined level; and otherwise, demodulate the control channel in the first modulation manner; or

the demodulator 82 is further configured to: demodulate the control channel in the second modulation manner when the subframe on which the control channel is located is an ordinary subframe, the number of OFDM symbols occupied by the backward compatible control channel is greater than a second threshold, the aggregation level of the control channel is a predetermined level, and the unusable RE exists, in the subframe on which the control channel is located, due to the CSI-RS; and otherwise, demodulate the control channel in the first modulation manner.

The second threshold is a positive number. A size of the second threshold is not limited in this embodiment.

In this embodiment, the predetermined level may be 1.

In this embodiment, the first modulation manner may be a QPSK modulation manner; and the second modulation manner may be a 16QAM manner.

In this embodiment, at the time when the second modulation manner is used to modulate the control channel such as the 16QAM manner, amplitude is also required to carry modulation information. Therefore, when the demodulator 82 demodulates the control channel in the second modulation manner, it is also required to determine EPRE of a data modulation symbol of the control channel, that is, a transmit power of the data modulation symbol of the control channel. In this embodiment, a manner in which the processor 81 determines the EPRE of the data modulation symbol of the control channel is the same as the manner in which the processor 71 in the embodiment shown in FIG. 7 of the present invention determines the EPRE of the data modulation symbol of the control channel. Details are not described herein again.

In the foregoing embodiment, overhead of control signaling can be reduced, and a downlink resource utilization rate can be improved.

Persons skilled in the art should understand that the accompanying drawings are merely schematic diagrams of an exemplary embodiment, and modules or processes in the accompanying drawings are not necessarily required in implementing the present invention.

Persons skilled in the art may understand that the modules in the apparatuses provided in the embodiments may be arranged in the apparatuses in a distributed manner according to the description of the embodiments, or may be arranged in one of or more apparatuses which are different from those described in the embodiments. The modules in the foregoing embodiments may be combined into one module, or split into a plurality of sub-modules.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A control channel modulation method, comprising:

   Determining (101), according to a length of control information borne on a control channel and the number of resource elements occupied by the control channel, an effective coding rate that is at the time when a first modulation manner is used to modulate the control channel; and Modulating (102) the control channel by using a second modulation manner when the effective coding rate is greater than a first threshold; **characterized by** further comprising: setting, according to channel quality information reported by a user equipment, the first threshold corresponding to the user equipment.

2. The method according to claim 1, further comprising: modulating the control channel in the first modulation manner when the effective coding rate is smaller than or equal to the first threshold.

3. The method according to any one of claims 1 to 2, wherein the resource elements occupied by the control channel are distributed in one resource block pair or at least two adjacent resource block pairs; and at the time when the second modulation manner is used to modulate the control channel, if it is required to share a demodulation reference signal between the control channel and a shared channel, energy per resource element of a data modulation symbol of the control channel is set to be equal to energy per resource element of a demodulation reference signal port, wherein the energy per resource element of the demodulation reference signal port is equal to energy per resource element of the shared channel.

4. The method according to any one of claims 1 to 3, wherein: at the time when the second modulation manner is used to modulate the control channel, energy per resource element of a data modulation symbol of the control channel is determined according to a ratio of the energy per resource element of the data modulation symbol of the control channel to energy per resource element of a reference signal of the control channel; or energy per resource element of a data modulation symbol of the control channel is determined according to a specific parameter of the user equipment; or energy per resource element of a data modulation symbol of the control channel is determined according to the effective coding rate and the first threshold; or energy per resource element of a data modulation symbol of the control channel is determined according to a specific parameter of the user equipment, the effective coding rate, and the first threshold.

5. A base station, comprising:

a modulator (51); and at least one processor (52), coupled to the modulator (51), wherein the processor (52) is configured to, according to a length of control information borne on a control channel and the number of resource elements occupied by the control channel, determine an effective coding rate that is at the time when a first modulation manner is used to modulate the control channel, and the modulator (51) is configured to modulate the control channel by using a second modulation manner when the effective coding rate determined by the processor (52) is greater than a first threshold; **characterized in that** the processor (52) is further configured to set, according to channel quality information reported by a user equipment, the first threshold corresponding to the user equipment.

6. The base station according to claim 5, wherein: the modulator (51) is further configured to modulate the control channel in the first modulation manner when the effective coding rate is smaller than or equal to the first threshold.

7. The base station according to claim 5 or 6, wherein: the processor (52) is further configured to, when the resource elements occupied by the control channel are distributed in one resource block pair or at least two adjacent resource block pairs, and the modulator (51) modulates the control channel in the second modulation manner, and if it is required to share a demodulation reference signal between the control channel and a shared channel, set energy per resource element of a data modulation symbol of the control channel to be equal to energy per resource element of a demodulation reference signal port, wherein the energy per resource element of the demodulation reference signal port is equal to energy per resource element of the shared channel.

8. The base station according to claim 5 or 6, wherein: the processor (52) is further configured to, when the modulator (51) modulates the control channel in the second modulation manner, determine energy per resource element of a data modulation symbol of the control channel according to a ratio of the energy per resource element of the data modulation symbol of the control channel to energy per resource element of a reference signal of the control channel; or determine energy per resource element of a data modulation symbol of the control channel according to a specific parameter of a user equipment; or determine energy per resource element of a data modulation symbol of the control channel according to the effective coding rate and the first threshold; or determine energy per resource element of a data modulation symbol of the control channel according to a specific parameter of a user equipment, the effective coding rate, and the first threshold.

**9.** A user equipment, comprising:

a demodulator (72) ; and
at least one processor (71), coupled to the demodulator (72), wherein the processor (71) is configured to, according to a length of control information borne on a control channel and the number of resource elements occupied by the control channel, determine an effective coding rate that is at the time of demodulating the control channel by using a first modulation manner, and
the demodulator (72) is configured to demodulate the control channel by using a second modulation manner when the effective coding rate determined by the processor (71) is greater than a first threshold;
**characterized by** further comprising:
a receiver, configured to: receive the first threshold sent by a base station through a broadcast channel; or receive the first threshold sent by the base station by using radio resource control signaling, wherein the first threshold is set by the base station for the user equipment according to channel quality information reported by the user equipment.

**10.** The user equipment according to claim 9, wherein:
the demodulator (72) is further configured to demodulate the control channel in the first modulation manner when the effective coding rate is smaller than or equal to the first threshold.

**11.** The user equipment according to claim 9 or 10, wherein:
the processor (71) is further configured to, when the resource elements occupied by the control channel are distributed in one resource block pair or at least two adjacent resource block pairs, and the demodulator (72) demodulates the control channel in the second modulation manner, and if it is required to share a demodulation reference signal between the control channel and a shared channel, set energy per resource element of a data modulation symbol of the control channel to be equal to energy per resource element of a demodulation reference signal port, wherein the energy per resource element of the demodulation reference signal port is equal to energy per resource element of the shared channel.

**12.** The user equipment according to claim 9 or 10, wherein:
the processor (71) is further configured to: when the demodulator (72) demodulates the control channel in the second modulation manner, determine energy per resource element of a data modulation symbol of the control channel according to a ratio, sent by a base station, of the energy per resource element of the data modulation symbol of the control channel to energy per resource element of a reference signal of the control channel; or determine energy per resource element of a data modulation symbol of the control channel according to a specific parameter of the user equipment; or determine energy per resource element of a data modulation symbol of the control channel according to the effective coding rate and the first threshold; or determine energy per resource element of a data modulation symbol of the control channel according to a specific parameter of the user equipment, the effective coding rate, and the first threshold.

**Patentansprüche**

**1.** Steuerkanalmodulationsverfahren, das Folgendes umfasst:

Bestimmen (101) gemäß einer Länge von Steuerinformationen, die auf einem Steuerkanal transportiert werden, und der Anzahl von Ressourcenelementen, die vom Steuerkanal belegt werden, einer effektiven Codierungsrate, die zu der Zeit besteht, wenn eine erste Modulationsweise verwendet wird, um den Steuerkanal zu modulieren; und
Modulieren (102) des Steuerkanals unter Verwendung einer zweiten Modulationsweise, wenn die effektive Codierungsrate größer ist als ein erster Schwellwert;
**dadurch gekennzeichnet, dass** es ferner Folgendes umfasst:
Einstellen gemäß Kanalqualitätsinformationen, die von einer Teilnehmereinrichtung gemeldet werden, des ersten Schwellwerts, der der Teilnehmereinrichtung entspricht.

**2.** Verfahren nach Anspruch 1, das ferner Folgendes umfasst:
Modulieren des Steuerkanals in der ersten Modulationsweise, wenn die effektive Codierungsrate kleiner als der erste Schwellwert ist oder mit diesem übereinstimmt.

**3.** Verfahren nach einem der Ansprüche 1 bis 2, wobei die Ressourcenelemente, die vom Steuerkanal belegt werden, in einem Ressourcenblockpaar oder mindestens zwei benachbarten Ressourcenblockpaaren verteilt sind; und
zu der Zeit, wenn die zweite Modulationsweise verwendet wird, um den Steuerkanal zu modulieren, falls es erforderlich ist, ein Demodulationsreferenzsignal zwischen dem Steuerkanal und einem gemeinsam genutzten Kanal gemeinsam zu nutzen, eine Energie pro Ressourcenelement eines Datenmodulationssymbols des Steuerkanals derart eingestellt wird, dass sie mit einer Energie pro Ressourcenelement eines Demodulationsreferenzsignalanschlusses übereinstimmt, wobei die Energie pro Ressourcenelement des Demodulationsreferenzsignalanschlusses mit einer Energie pro Ressourcenelement des gemeinsam genutzten Kanals übereinstimmt.

4. Verfahren nach einem der Ansprüche 1 bis 3, wobei: zu der Zeit, wenn die zweite Modulationsweise verwendet wird, um den Steuerkanal zu modulieren, eine Energie pro Ressourcenelement eines Datenmodulationssymbols des Steuerkanals gemäß einem Verhältnis der Energie pro Ressourcenelement des Datenmodulationssymbols des Steuerkanals zu einer Energie pro Ressourcenelement eines Referenzsignals des Steuerkanals bestimmt wird oder eine Energie pro Ressourcenelement eines Datenmodulationssymbols des Steuerkanals gemäß einem spezifischen Parameter der Teilnehmereinrichtung bestimmt wird oder eine Energie pro Ressourcenelement eines Datenmodulationssymbols des Steuerkanals gemäß der effektiven Codierungsrate und dem ersten Schwellwert bestimmt wird oder eine Energie pro Ressourcenelement eines Datenmodulationssymbols des Steuerkanals gemäß einem spezifischen Parameter der Teilnehmereinrichtung, der effektiven Codierungsrate und dem ersten Schwellwert bestimmt wird.

5. Basisstation, die Folgendes umfasst:

einen Modulator (51) und
mindestens einen Prozessor (52), der an den Modulator (51) gekoppelt ist, wobei der Prozessor (52) dazu ausgelegt ist, gemäß einer Länge von Steuerinformationen, die auf einem Steuerkanal transportiert werden, und der Anzahl von Ressourcenelementen, die vom Steuerkanal belegt werden, eine effektive Codierungsrate zu bestimmen, die zu der Zeit besteht, wenn eine erste Modulationsweise verwendet wird, um den Steuerkanal zu modulieren, und
der Modulator (51) dazu ausgelegt ist, den Steuerkanal unter Verwendung einer zweiten Modulationsweise zu modulieren, wenn die effektive Codierungsrate, die vom Prozessor (52) bestimmt wird, größer ist als ein erster Schwellwert;
**dadurch gekennzeichnet, dass**
der Prozessor (52) ferner dazu ausgelegt ist, gemäß Kanalqualitätsinformationen, die von einer Teilnehmereinrichtung gemeldet werden, den ersten Schwellwert, der der Teilnehmereinrichtung entspricht, einzustellen.

6. Basisstation nach Anspruch 5, wobei:
der Modulator (51) ferner dazu ausgelegt ist, den Steuerkanal in der ersten Modulationsweise zu modulieren, wenn die effektive Codierungsrate kleiner als der erste Schwellwert ist oder mit diesem übereinstimmt.

7. Basisstation nach Anspruch 5 oder 6, wobei:
der Prozessor (52) ferner dazu ausgelegt ist, wenn die Ressourcenelemente, die vom Steuerkanal belegt werden, in einem Ressourcenblockpaar oder mindestens zwei benachbarten Ressourcenblockpaaren verteilt sind und der Modulator (51) den Steuerkanal in der zweiten Modulationsweise moduliert und falls es erforderlich ist, ein Demodulationsreferenzsignal zwischen dem Steuerkanal und einem gemeinsam genutzten Kanal gemeinsam zu nutzen, eine Energie pro Ressourcenelement eines Datenmodulationssymbols des Steuerkanals derart einzustellen, dass sie mit einer Energie pro Ressourcenelement eines Demodulationsreferenzsignalanschlusses übereinstimmt, wobei die Energie pro Ressourcenelement des Demodulationsreferenzsignalanschlusses mit einer Energie pro Ressourcenelement des gemeinsam genutzten Kanals übereinstimmt.

8. Basisstation nach Anspruch 5 oder 6, wobei:
der Prozessor (52) ferner dazu ausgelegt ist, wenn der Modulator (51) den Steuerkanal in der zweiten Modulationsweise moduliert, eine Energie pro Ressourcenelement eines Datenmodulationssymbols des Steuerkanals gemäß einem Verhältnis der Energie pro Ressourcenelement des Datenmodulationssymbols des Steuerkanals zu einer Energie pro Ressourcenelement eines Referenzsignals des Steuerkanals zu bestimmen oder eine Energie pro Ressourcenelement eines Datenmodulationssymbols des Steuerkanals gemäß einem spezifischen Parameter einer Teilnehmereinrichtung zu bestimmen oder eine Energie pro Ressourcenelement eines Datenmodulationssymbols des Steuerkanals gemäß der effektiven Codierungsrate und dem ersten Schwellwert zu bestimmen oder eine Energie pro Ressourcenelement eines Datenmodulationssymbols des Steuerkanals gemäß einem spezifischen Parameter einer Teilnehmereinrichtung, der effektiven Codierungsrate und dem ersten Schwellwert zu bestimmten.

9. Teilnehmereinrichtung, die Folgendes umfasst:

einen Demodulator (72) und
mindestens einen Prozessor (71), der an den Demodulator (72) gekoppelt ist, wobei der Prozessor (71) dazu ausgelegt ist, gemäß einer Länge von Steuerinformationen, die auf einem Steuerkanal transportiert werden, und der Anzahl von Ressourcenelementen, die vom Steuerkanal belegt werden, eine effektive Codierungsrate zu bestimmen, die zu der Zeit des Demodulierens des Steuerkanals unter Verwendung einer ersten Modulationsweise besteht, und

der Demodulator (72) dazu ausgelegt ist, den Steuerkanal unter Verwendung einer zweiten Modulationsweise zu demodulieren, wenn die effektive Codierungsrate, die vom Prozessor (71) bestimmt wird, größer ist als ein erster Schwellwert;

**dadurch gekennzeichnet, dass** sie ferner Folgendes umfasst:

einen Empfänger, der zu Folgendem ausgelegt ist: Empfangen des ersten Schwellwerts, der von einer Basisstation über einen Rundsendekanal gesendet wird; oder Empfangen des ersten Schwellwerts, der von der Basisstation unter Verwendung einer Funkressourcensteuersignalisierung gesendet wird, wobei der erste Schwellwert von der Basisstation gemäß Kanalqualitätsinformationen, die von der Teilnehmereinrichtung gemeldet werden, für die Teilnehmereinrichtung eingestellt wird.

10. Teilnehmereinrichtung nach Anspruch 9, wobei: der Demodulator (72) ferner dazu ausgelegt ist, den Steuerkanal in der ersten Modulationsweise zu demodulieren, wenn die effektive Codierungsrate kleiner als der erste Schwellwert ist oder mit diesem übereinstimmt.

11. Teilnehmereinrichtung nach Anspruch 9 oder 10, wobei: der Prozessor (71) ferner dazu ausgelegt ist, wenn die Ressourcenelemente, die vom Steuerkanal belegt werden, in einem Ressourcenblockpaar oder mindestens zwei benachbarten Ressourcenblockpaaren verteilt sind und der Demodulator (72) den Steuerkanal in der zweiten Modulationsweise demoduliert und falls es erforderlich ist, ein Demodulationsreferenzsignal zwischen dem Steuerkanal und einem gemeinsam genutzten Kanal gemeinsam zu nutzen, eine Energie pro Ressourcenelement eines Datenmodulationssymbols des Steuerkanals derart einzustellen, dass sie mit einer Energie pro Ressourcenelement eines Demodulationsreferenzsignalanschlusses übereinstimmt, wobei die Energie pro Ressourcenelement des Demodulationsreferenzsignalanschlusses mit einer Energie pro Ressourcenelement des gemeinsam genutzten Kanals übereinstimmt.

12. Teilnehmereinrichtung nach Anspruch 9 oder 10, wobei: der Prozessor (71) ferner zu Folgendem ausgelegt ist: wenn der Demodulator (72) den Steuerkanal in der zweiten Modulationsweise demoduliert, eine Energie pro Ressourcenelement eines Datenmodulationssymbols des Steuerkanals gemäß einem Verhältnis, das von einer Basisstation gesendet wird, der Energie pro Ressourcenelement des Datenmodulationssymbols des Steuerkanals zu einer Energie pro Ressourcenelement eines Referenzsignals des Steuerkanals zu bestimmen oder eine Energie pro Ressourcenelement eines Datenmodulationssymbols des Steuerkanals gemäß einem spezifischen Parameter der Teilnehmereinrichtung zu bestimmen oder eine Energie pro Ressourcenelement eines Datenmodulationssymbols des Steuerkanals gemäß der effektiven Codierungsrate und dem ersten Schwellwert zu bestimmen oder eine Energie pro Ressourcenelement eines Datenmodulationssymbols des Steuerkanals gemäß einem spezifischen Parameter der Teilnehmereinrichtung, der effektiven Codierungsrate und dem ersten Schwellwert zu bestimmten.

## Revendications

1. Procédé de modulation de canal de commande, comportant les étapes consistant à :

déterminer (101), en fonction d'une longueur d'informations de commande transportées sur un canal de commande et du nombre d'éléments de ressources occupés par le canal de commande, un débit de codage effectif en vigueur au moment où une première méthode de modulation est utilisée pour moduler le canal de commande ; et moduler (102) le canal de commande en utilisant une deuxième méthode de modulation lorsque le débit de codage effectif est supérieur à un premier seuil ; **caractérisé en ce qu'**il comporte en outre l'étape consistant à : régler, en fonction d'informations de qualité de canal rapportées par un équipement d'utilisateur, le premier seuil correspondant à l'équipement d'utilisateur.

2. Procédé selon la revendication 1, comportant en outre l'étape consistant à : moduler le canal de commande selon la première méthode de modulation lorsque le débit de codage effectif est inférieur ou égal au premier seuil.

3. Procédé selon l'une quelconque des revendications 1 à 2, les éléments de ressources occupés par le canal de commande étant répartis dans une seule paire de blocs de ressources ou au moins deux paires adjacentes de blocs de ressources ; et au moment où la deuxième méthode de modulation est utilisée pour moduler le canal de commande, s'il est indispensable de partager un signal de référence de démodulation entre le canal de commande et un canal partagé, l'énergie par élément de ressources d'un symbole de modulation de données du canal de commande étant réglée pour être égale à l'énergie par élément de ressources d'un port de signal de référence de démodulation, l'énergie par élément de ressources du port de signal de référence de démodulation étant égale à l'énergie par élément de ressources du canal partagé.

4. Procédé selon l'une quelconque des revendications 1 à 3 :

au moment où la deuxième méthode de modulation est utilisée pour moduler le canal de commande, l'énergie par élément de ressources d'un symbole de modulation de données du canal de commande étant déterminée en fonction d'un rapport de l'énergie par élément de ressources du symbole de modulation de données du canal de commande à l'énergie par élément de ressources d'un signal de référence du canal de commande ; ou l'énergie par élément de ressources d'un symbole de modulation de données du canal de commande étant déterminée en fonction d'un paramètre spécifique de l'équipement d'utilisateur ; ou l'énergie par élément de ressources d'un symbole de modulation de données du canal de commande étant déterminée en fonction du débit de codage effectif et du premier seuil ; ou l'énergie par élément de ressources d'un symbole de modulation de données du canal de commande étant déterminée en fonction d'un paramètre spécifique de l'équipement d'utilisateur, du débit de codage effectif, et du premier seuil.

5. Station de base, comportant :

un modulateur (51) ; et
au moins un processeur (52), couplé au modulateur (51), le processeur (52) étant configuré pour, en fonction d'une longueur d'informations de commande transportées sur un canal de commande et du nombre d'éléments de ressources occupés par le canal de commande, déterminer un débit de codage effectif en vigueur au moment où une première méthode de modulation est utilisée pour moduler le canal de commande, et
le modulateur (51) étant configuré pour moduler le canal de commande en utilisant une deuxième méthode de modulation lorsque le débit de codage effectif déterminé par le processeur (52) est supérieur à un premier seuil ;
**caractérisé en ce que**
le processeur (52) est en outre configuré pour régler, en fonction d'informations de qualité de canal rapportées par un équipement d'utilisateur, le premier seuil correspondant à l'équipement d'utilisateur.

6. Station de base selon la revendication 5 :
le modulateur (51) étant en outre configuré pour moduler le canal de commande selon la première méthode de modulation lorsque le débit de codage effectif est inférieur ou égal au premier seuil.

7. Station de base selon la revendication 5 ou 6 :
le processeur (52) étant en outre configuré pour, lorsque les éléments de ressources occupés par le canal de commande sont répartis dans une seule paire de blocs de ressources ou au moins deux paires adjacentes de blocs de ressources, et lorsque le modulateur (51) module le canal de commande selon la deuxième méthode de modulation, et s'il est indispensable de partager un signal de référence de démodulation entre le canal de commande et un canal partagé, régler l'énergie par élément de ressources d'un symbole de modulation de données du canal de commande pour qu'elle soit égale à l'énergie par élément de ressources d'un port de signal de référence de démodulation, l'énergie par élément de ressources du port de signal de référence de démodulation étant égale à l'énergie par élément de ressources du canal partagé.

8. Station de base selon la revendication 5 ou 6 :

le processeur (52) étant en outre configuré pour, lorsque le modulateur (51) module le canal de commande selon la deuxième méthode de modulation, déterminer l'énergie par élément de ressources d'un symbole de modulation de données du canal de commande en fonction d'un rapport de l'énergie par élément de ressources du symbole de modulation de données du canal de commande à l'énergie par élément de ressources d'un signal de référence du canal de commande ; ou déterminer l'énergie par élément de ressources d'un symbole de modulation de données du canal de commande en fonction d'un paramètre spécifique d'un équipement d'utilisateur ; ou déterminer l'énergie par élément de ressources d'un symbole de modulation de données du canal de commande en fonction du débit de codage effectif et du premier seuil ; ou déterminer l'énergie par élément de ressources d'un symbole de modulation de données du canal de commande en fonction d'un paramètre spécifique d'un équipement d'utilisateur, du débit de codage effectif, et du premier seuil.

9. Équipement d'utilisateur, comportant :

un démodulateur (72) ; et

au moins un processeur (71), couplé au démodulateur (72), le processeur (71) étant configuré pour, en fonction d'une longueur d'informations de commande transportées sur un canal de commande et du nombre d'éléments de ressources occupés par le canal de commande, déterminer un débit de codage effectif en vigueur au moment de la démodulation du canal de commande en utilisant une première méthode de modulation, et

le démodulateur (72) étant configuré pour démoduler le canal de commande en utilisant une deuxième méthode de modulation lorsque le débit de codage effectif déterminé par le processeur (71) est supérieur à un premier seuil ;

**caractérisé en ce qu'**il comporte en outre :

un récepteur, configuré pour : recevoir le premier seuil émis par une station de base via un canal de diffusion ; ou recevoir le premier seuil émis par la station de base en utilisant une signalisation de gestion des ressources radioélectriques, le premier seuil étant réglé par la station de base pour l'équipement d'utilisateur en fonction d'informations de qualité de canal rapportées par l'équipement d'utilisateur.

**10.** Équipement d'utilisateur selon la revendication 9 :

le démodulateur (72) étant en outre configuré pour démoduler le canal de commande selon la première méthode de modulation lorsque le débit de codage effectif est inférieur ou égal au premier seuil.

**11.** Équipement d'utilisateur selon la revendication 9 ou 10 :

le processeur (71) étant en outre configuré pour, lorsque les éléments de ressources occupés par le canal de commande sont répartis dans une seule paire de blocs de ressources ou au moins deux paires adjacentes de blocs de ressources, et lorsque le démodulateur (72) démodule le canal de commande selon la deuxième méthode de modulation, et s'il est indispensable de partager un signal de référence de démodulation entre le canal de commande et un canal partagé, régler l'énergie par élément de ressources d'un symbole de modulation de données du canal de commande pour qu'elle soit égale à l'énergie par élément de ressources d'un port de signal de référence de démodulation, l'énergie par élément de ressources du port de signal de référence de démodulation étant égale à l'énergie par élément de ressources du canal partagé.

**12.** Équipement d'utilisateur selon la revendication 9 ou 10 :

le processeur (71) étant en outre configuré pour: lorsque le démodulateur (72) démodule le canal de commande selon la deuxième méthode de modulation, déterminer l'énergie par élément de ressources d'un symbole de modulation de données du canal de commande en fonction d'un rapport, émis par une station de base, de l'énergie par élément de ressources du symbole de modulation de données du canal de commande à l'énergie par élément de ressources d'un signal de référence du canal de commande ; ou déterminer l'énergie par élément de ressources d'un symbole de modulation de données du canal de commande en fonction d'un paramètre spécifique de l'équipement d'utilisateur ; ou déterminer l'énergie par élément de ressources d'un symbole de modulation de données du canal de commande en fonction du débit de codage effectif et du premier seuil ; ou déterminer l'énergie par élément de ressources d'un symbole de modulation de données du canal de commande en fonction d'un paramètre spécifique de l'équipement d'utilisateur, du débit de codage effectif, et du premier seuil.

Determine, according to a length of control information borne on a
control channel and the number of resource elements occupied by the
control channel, an effective coding rate that is at the time of modulating
the control channel in a first modulation manner

101

Modulate the control channel in a second modulation manner when the
effective coding rate is greater than a first threshold

102

FIG. 1

Determine a factor that affects an effective coding rate that is at the time
of modulating a control channel in a first modulation manner

201

Modulate the control channel in the first modulation manner or a second
modulation manner according to the factor

202

FIG. 2

Determine, according to a length of control information borne on a control channel and the number of resource elements occupied by the control channel, an effective coding rate that is at the time of demodulating the control channel in a first modulation manner — 301

Demodulate the control channel in a second modulation manner when the effective coding rate is greater than a first threshold — 302

FIG. 3

Determine a factor that affects an effective coding rate that is at the time of demodulating a control channel in a first modulation manner — 401

Demodulate the control channel in the first modulation manner or a second modulation manner according to the factor — 402

FIG. 4

```
┌─────────────────────────┐
│                         │      51
│       Modulator         │ ⌒
│                         │
└─────────────────────────┘
            │
┌─────────────────────────┐
│                         │      52
│       Processor         │ ⌒
│                         │
└─────────────────────────┘
```

FIG. 5

```
┌─────────────────────────┐
│                         │      62
│       Modulator         │ ⌒
│                         │
└─────────────────────────┘
            │
┌─────────────────────────┐
│                         │      61
│       Processor         │ ⌒
│                         │
└─────────────────────────┘
```

FIG. 6

```
┌─────────────────────────┐
│                         │      72
│      Demodulator        │ ⌒
│                         │
└─────────────────────────┘
            │
┌─────────────────────────┐
│                         │      71
│       Processor         │ ⌒
│                         │
└─────────────────────────┘
```

FIG. 7

FIG. 8